# Europäisches Patentamt

(19) **European Patent Office**

**Office européen des brevets**

(11) Publication number: **0 030 754**
**B1**

(12) **EUROPEAN PATENT SPECIFICATION**

(45) Date of publication of patent specification: **12.04.89**

(21) Application number: **80201137.9**

(22) Date of filing: **02.12.80**

(51) Int. Cl.⁴: **G 11 B 17/02**

(54) **Centering element and drive unit for interchangeable information discs in a system for writing or reading information.**

(30) Priority: **10.12.79 NL 7908859**

(43) Date of publication of application:
**24.06.81 Bulletin 81/25**

(45) Publication of the grant of the patent:
**12.04.89 Bulletin 89/15**

(84) Designated Contracting States:
**AT BE CH DE FR GB IT LI NL SE**

(56) References cited:
**DE-A-2 709 261**
**NL-A-7 806 072**
**US-A-1 881 110**
**US-A-3 416 154**
**US-A-3 488 059**
**US-A-4 125 883**

(73) Proprietor: **N.V. Philips' Gloeilampenfabrieken**
**Groenewoudseweg 1**
**NL-5621 BA Eindhoven (NL)**

(72) Inventor: **van der Giessen, Pieter**
**c/o INT. OCTROOIBUREAU B.V. Prof. Holstlaan 6**
**NL-5656 AA Eindhoven (NL)**

(74) Representative: **Van Weele, Paul Johannes Frits**
**et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a system for writing and/or reading information, which system comprises a drive unit and interchangeable information discs which are each adapted to be placed on the drive unit and to be removed therefrom and which each comprise a carrier and an information layer supported thereby and are each provided with a central opening which is bounded by circular wall, a centring device being provided for centring an information disc on the drive unit, the system comprising a turntable, which is rotatable about an axis of rotation and which has a supporting surface for an information disc on one side, in which side is formed a recess bounded a circular wall which is concentric with the axis of rotation; a centring element which rotates with an information disc on the turntable and which has a central portion and a peripheral portion on portions adapted to cooperate both with the wall of the central opening of the information disc and with the wall of the recess in the turntable, for centring the information disc on the turntable upon an elastic axial displacement of the central portion, the peripheral portion or portions being connected to the central portion by an elastic intermediate portion or portions; displacement means in the drive unit for axially displacing the central portion of the centring element.

Systems of the forementioned type (known from, for example, United States Patent Specification 4,125,883) using cheap, flexible information discs manufactured from magnetic foil, are employed in various fields of data processing. The information disc is accommodated in a special enclosure in the form of a square envelope which is formed with a slot through which one or more magnetic heads can cooperate with the information disc. The envelope also has a central opening which is larger than the central opening in the information disc itself, so that also a part of the information disc around its central opening is accessible from the exterior of the enclosure. Drive units for such disc units are commercially available and have gained a certain popularity because of their small dimensions and comparatively low costs. They are, for example, used for the storage of data or a program for small computers and similar equipment, such as for example test processors. The flexible information disc is rotated inside its enclosure at a comparatively low speed, for example 300 revolutions per minute. The centring quality of the information disc on the turntable is determined by the difference in the diameter of the central opening in the information disc and the diameter of the recess in the turntable. As a standard the information discs are formed with a central opening having a diameter which is slightly greater than that of the recess in the turntable. Deviations from this standard diameter within a comparatively large tolerance range are considered to be permissible. A certain eccentricity of the information disc on the turntable is therefore inevitable. However, for the relevant purpose, this is considered to be acceptable, because the flexible information discs are not intended for those applications where very large amounts of data are to be packed very densely on the disc. Furthermore, the information discs have such a low mass that at the said low speed they produce only slight centrifugal forces during rotation, so that the resulting eccentricity will not always be equal to the maximum possible eccentricity. The friction forces occurring between the turntable and the information disc are sufficiently great to prevent shifting of the information disc under the influence of the centrifugal forces which are produced.

For some time there has been a need for systems which, like the systems described in the foregoing which operate with flexible information discs, have a broad field of application and furthermore have small dimensions, but which in addition are suitable for the storage and reproduction of substantially greater amounts of data. In such systems the requirements imposed in respect of the maxima permissible eccentricity of the information disc are more stringent. Thus, it is no longer possible to employ systems in which a maximum eccentricity of the information disc relative to the axis of rotation of the turntable can occur which is equal to the difference in diameter of the central opening in the information disc and the recess in the turntable. It is the object of the invention to provide a system of the type mentioned in the preamble, which system is suitable for the storage and the reproduction of substantially large amounts of information on readily interchangeable information discs and the invention is characterized in that each information disc has a substantially rigid carrier, the wall of the central opening in each information disc has an accurately finished surface, and the centring element is arranged to cooperate with at least one of said walls of the central opening of the relevant information disc and the recess in the turntable via elastically deformable compensation means for elastically compensating for differences in the diameter of said walls through elastic radial deformation. The invention employs the combination of these three features to accomplish the desired object. The use of a rigid information disc makes is possible to exert pressure forces on the inner wall of the central opening of the information disc for the purpose of centring the information disc, which is hardly if at all possible in the case of flexible information discs. For a satisfactory centring to be obtained, however, it is also necessary to have an accurately finished surface on the wall of the central opening in the disc. This also means that the tolerance range for permissible differences in diameter can be reduced. As neither the wall of the central opening in the information disc nor the wall of the recess in the turntable can be finished with absolute accuracy, slight dimensional variations will occur, even in the case of tight tolerance ranges. However, by the use of elastically deformable compensation means such slight differences in diameter can be compensated for elastically. These elastically deformable compensation means can be manufactured from an elastic material with a comparatively high modulus of elasticity, so that when sufficiently high pressure is exerted they are capable of compensating for the said differences in diameter and, more over, are capable of offering sufficient resistance to the centrifugal forces which are exerted on the information disc during rotation. It will be evident that rigid information discs generally will have a greater mass than the said flexible information discs, so that also greater centrifugal forces will be produced. In comparison with the prior art described in the foregoing the invention not only provides a system for writing and/or reading information with a better centring of the information disc than in known systems, but moreover makes it possible to produce systems with information carriers of higher quality. It is, for example, possible to employ information discs with an aluminium carrier, as is customary in the known information disc assemblies used in peripheral apparatus for larger computers. Such information discs have a much flatter surface than the known flexible information discs. They are more suitable for the storage of larger amounts of information. The invention may also be employed in systems with optical information discs, for example in the VLP system for the reproduction of films and the like via a television set or in optical storage systems as peripheral equipment for computors.

It is possible to employ an embodiment of the invention which is characterized in that the elastically deformable compensation means comprise an elastically deformable compensation ring. In a suitable embodiment of the invention said ring may be connected to the information disc so that it can be placed on and removed from the drive unit together with said disc. The advantage of this embodiment is that the accurately finished inner wall of the central opening in the information disc is protected by the elastically deformable compensation ring against damage. The information discs belonging to a system in accordance with the invention should be interchangeable and should therefore be suitable for repeated insertion in and removal from a drive unit. A further requirement is that they can withstand frequency handling and prolonged storage, as the case may be. Thus, in the absence of some form of protection, it is not unlikely that the wall of the central opening of the information disc will be damaged. The adverse effects of this may be of two different kinds. First damage to the wall may give rise to an additional eccentricity of the information disc due to the material of the wall being displaced in a radial direction with the result that a local projection is formed on the wall. Second, as a result of the damage material of the wall may also be displaced in an axial direction over the information disc surface, so that near the central opening an unevenness is formed on the information disc surface. When the information disc is placed on a turntable this may give rise to an oblique position of the information disc, which may impair the correct cooperation of a magnetic head or an optical head with the information disc. Magnetic heads which are adapted to cooperate with rigid information discs of high quality move very close to the information disc surface, on an air cushion measuring approximately 2 microns. Contact of the magnetic head with the information disc surface is detrimental both to the magnetic head and to the information disc, which may both be damaged. This may give rise to loss of information and even irreparable damage to the magnetic head and the magnetic information disc. By mounting the elastically deformable compensation ring on the information disc and thus protecting the wall of the central opening the likelihood of these effects occurring is reduced also when the information disc has been removed from the drive unit.

In one embodiment of the invention the centring element may be connected to the elastically deformable compensation ring. The elastically deformable compensation ring and the centring element may, for example, belong to a centring member, which is connected to the information disc and constitutes an integral unit which is manufactured from a suitable elastic plastics. In a further embodiment of the invention the central and intermediate portions of the centring element together with the elastic compensation ring constitute a centring disc which is integrally made of an elastic plastics. Every information disc belonging to a system in accordance with this embodiment of the invention is centrally provided with such a centring disc, which may also be employed for marking purposes in order to identify the information disc. Moreover, centring discs of different colours or other characteristic differences may be used. The drive unit for the system is simplified when this embodiment is used, because the complete centring element is mounted in the information disc and therefore need not be provided on the drive unit. The drive unit cooperates with the centring disc of the information disc by means of the turntable and by means of the displacement means which serve to move the central portion of the centring disc when the information disc is mounted on the turntable.

Suitably, an embodiment of the invention may be used which is characterized in that the centring disc has substantially the form of a diaphragm, comprising an outer ring, an inner portion and a corrugation which connects the outer ring to the inner portion, the outer ring bearing on one side of the information disc and the corrugation extending through the central opening of said disc and projecting beyond the other side of the information disc, and the corrugation engaging at its outer circumference with the wall of the central opening of the information disc the portion of the corrugation which projects beyond the information disc functioning as the elastically deformable compensation ring of the centring disc. In order to prevent problems when such an information disc is placed on the turntable, an embodiment of the invention is of interest which is characterized in that the centring disc and/or the turntable is (are) provided with at least one vent hole for venting the space inside the recess in the turntable when the information disc is in place.

For information discs which are to be placed on a turntable in a first position and also in an inverted second position, for example two-sides optical information discs which cooperate with a translating optical head on the deck of the drive unit, an embodiment of the invention is of interest which is characterized in that the information disc is provided with two centring elements, one on each side of the information disc, each of the centring elements having elastic intermediate portions which radiate from the central portion of the element and which are spaced from one another by slots, through which slots the intermediate portions of the other centring element project. Preferably, the central portions of the two centring elements are coupled to each other by a coupling element. This prevents the loss of one or both centring elements.

It is alternatively possible to employ an embodiment of the invention which is characterized in that the centring element which rotates with an information disc, in known manner, forms part of and is connected to the drive unit and that the elastically deformable compensation ring is mounted on the peripheral portion or portions of the centring element. In this embodiment the centring element, like the system known from the said United States Patent Specification 4,125,883, is located in the drive unit and the elastically deformable compensation ring is mounted thereon. If necessary, the information discs belonging to a system in accordance with this embodiment of the invention may be provided with a different type of protection of the wall of the central opening, for example by accommodating each information disc in a suitable enclosure.

It is also possible to mount the elastic compensation ring on the turntable, against the wall of the recess therein, instead of on the centring element.

Another embodiment of the invention is characterized in that the information disc is provided with a hub which is connected to the information-layer carrier, and in which the central opening is formed, and that the wall of the central opening is provided with portions which define an annular space, the elastically deformable compensation ring being mounted in the annular space and projecting radially inwards beyond the wall of the central opening, at least when the information disc is not mounted on the drive unit. The use of a hub is specially of interest in those systems in which the information-disc carrier is not adapted to be provided with a central opening whose inner wall directly cooperates with the centring element. This may occur for example, when the information-disc carrier is thin or when the carrier consists of a material which is difficult to machine or which is brittle. The hub can be made of any suitable material and be connected to the information-disc carrier in a suitable manner, for example by an adhesive, after which the wall of the central opening of the information disc, which central opening is now formed in the hub, can by a suitable operation be formed so as to be exactly centred relative to the other parts of the information disc.

As stated previously, if much information is to be stored in the information disc, not only an excellent centring of the information disc is required, but also steps which ensure that the information disc rotates in a plane which is exactly perpendicular to the axis of rotation. In this respect an embodiment of the invention is of interest which is characterized in that for supporting the information disc in the drive unit the turntable makes direct contact with the information disc and thus directly supports said disc. By the use of existing manufacturing methods it is readily possible to ensure that the supporting surface of the turntable, of cource within the appropriate tolerances, is situated exactly in a plane at right angles to the axis of rotation. When such a precision-made turntable cooperates with a rigid high-quality information disc it is found to be possible, also in systems in accordance with the invention employing interchangeable magnetic information discs, to obtain such a high accuracy in the position of the information surface of the information disc, both in respect of its eccentricity and in respect of its perpendicularity to the axis of rotation, that advanced magnetic-head constructions may be used, the magnetic heads floating above the information surface at a distance of the order of magnitude of only 1 micron.

A further embodiment of the invention relates to a system in which, as is also described in the said United States Patent Specification 4,125,883, the drive unit comprise displacement means for axially moving the central portion of the centring element, which displacement means rotate along with an information disc. This embodiment is characterized in that the displacement means in the drive unit and said central portion of the centring element are provided with portions which cooperate with each other for centring the displacement means relative to the said central portion and thus also relative to the axis of rotation of the turntable.

A further embodiment is characterized in that the displacement means in the drive unit are coaxially connected to an information disc loader for urging the information disc against the turntable, the said displacement means and the information disc loader being arranged relative to each other in such a way that upon an axial displacement the displacement means, when the information disc is in place on the turntable, first make contact with the central portion of the centring element and then subsequently move this portion axially in such a way that the information disc is centred, and finally the information disc loader bears on the information disc so as to urge said disc against the turntable.

The invention will now be described in more detail with reference to the drawings, which relates to a number of embodiments, in which drawings

Fig. 1 is a perspective view of a system in accordance with the invention, comprising a video disc player and an associated interchangeable video disc,

Fig. 2, in an exploded perspective, partly cross-sectional view, shows a number of parts of the system of Fig. 1 which are of importance for the invention.

Fig. 3 is a cross-sectional view taken on the axis of rotation of the turntable of the system of Fig. 1, showing the turntable, a video disc, and an element, belonging to the video disc player, for centring or retaining the video disc,

Fig. 4 is a cross-sectional view similar to that of Fig. 3, said element having been moved towards the disc over a certain distance and being in contact with a centring disc belonging to the information disc,

Fig. 5 is a cross-sectional view similar to that of Fig. 4, but now with the various parts in a mutual relationship in which the information disc is centred on the turntable,

Fig. 6 is a cross-sectional view similar to that of Fig. 5, showing the information disc being pressed onto the turntable,

Fig. 7 is an enlarged detail of Fig. 6,

Fig. 8 is a cross-sectional view, similar to that of Fig. 3, of a different embodiment of the invention,

Fig. 9 is an exploded view of the two centring members and a coupling member of the embodiment of Fig. 8,

Fig. 10 is also a cross-sectional view similar to that of Fig. 3 of another embodiment of the invention, showing the various components in a relationship to each other such that an information disc can be placed on or removed from the drive unit.

Fig. 11 is a cross-sectional view similar to that of Fig. 10, showing the various parts now in a relationship to each other such that the information disc is centred and clamped in position on the turntable,

Fig. 12 is a detail of a cross-sectional view similar to that of Fig. 11, but relating to a different embodiment of the invention,

Fig. 13 is detail of a cross-sectional view similar to that of Fig. 11, of still another embodiment of the invention, and

Fig. 14 again is a detail of a cross-sectional view similar to that of Fig. 11, of yet another embodiment of the invention.

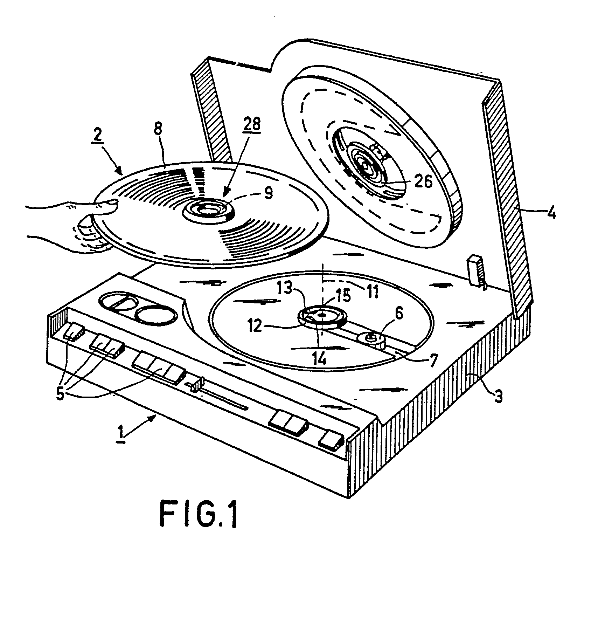

Fig. 1 shows a video disc player 1 with an associated video disc 2, together belonging to a standard system for reproducing video information. The video disc player comprises a base 3 to which a cover 4 is pivoted. At the front side of the base there are located a number of controls 5. In the base 3 an optical head 6 is radially movable in a slot 7. With the aid of the optical head 6 information can be read from the video disc 2. The video disc can manually be placed in the drive unit 1 and be removed therefrom and is thus interchangeable with other similar video discs and can also be played on other video disc players similar to that of Fig. 1. The video disc comprises a carrier 8 as well as an information layer which is extremely thin and therefore not shown. The video disc is formed with a central opening 9 bounded by a circular wall 10.

A centring device for centring the video disc 2 in the video disc player 1 comprises a turntable 12, which is rotatable about an axis of rotation 11 and which has a supporting surface 13 for the video disc 2 on one side, in which side is formed a recess 14 bounded by a circular wall 15 which is concentric with the axis of rotation 11. The centring device further, comprises a centring element 16, which rotates with the video disc 2 and which has a central portion 17 and a peripheral portion 19 for cooperating with both the wall 10 of the central opening of the video disc 2 and the wall 15 of the recess 14 in the turntable 12, for centring the video disc 2 on the turntable 12 upon an elastic axial movement of the central portion 17, the central and peripheral portions being interconnected by an elastic intermediate portion 18. The centering device also comprises displacement means comprising the cover 4 of the video disc player, a pin 20 which is mounted in said cover and which is provided with a flange 21 and extends with clearance through an opening 22 in the cover, a helical spring 23 surrounding the pin 20, as well as a disc 24 and a ball-bearing 25. The displacement means further include a part of a member 26 in which the ball-bearing 25 is mounted, which member will be discussed in more detail further on in the description.

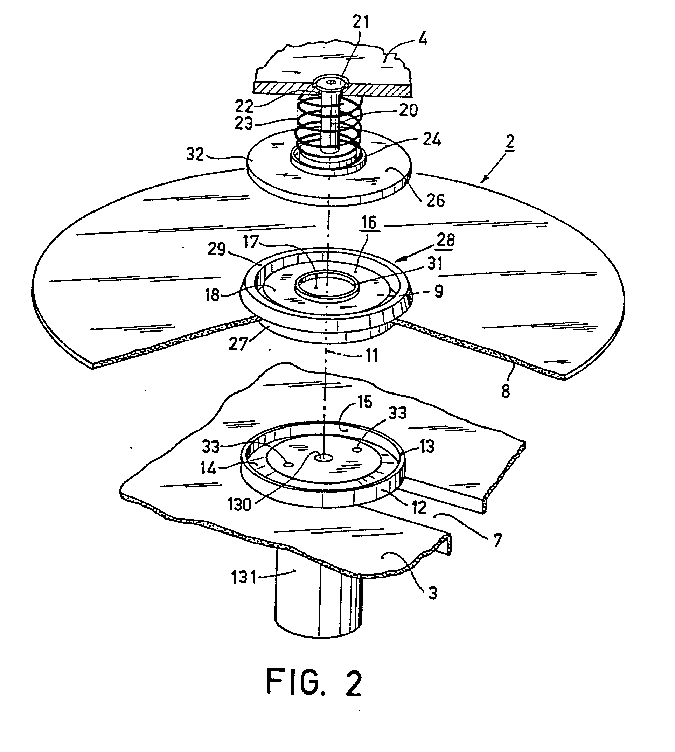

The surface of the wall 10 of the central opening in the video disc is accurately finished to comparatively tight tolerances by means of a precision machining operation, such as, for example, a turning operation. In the case of a magnetic information disc with an aluminium carrier having an outer diameter of approximately 200 mm, the central opening may have a diameter of for example, 63,5 mm with a tolerance of 80 microns. In the case of an optical information disc with two glass carriers having an outer diameter of approximately 300 mm, the central opening may have a diameter of 35 mm with a tolerance of 20 microns. The centring element 16 ccoperates with the wall 10 of the central opening 9 in the information disc and also with the inner wall 15 of the central recess 14 in the turntable 12 via elastically deformable compensation means for elastically compensating for differences in diameter through elastic radial deformation. In the embodiment of the invention in accordance with Figs. 1 to 7 the elastically deformable compensation means comprise an elastically deformable compensation ring 27. This ring is connected to the information disc 2 and can thus be placed on and removed from the video disc player 1 together with said disc. The centring element 16 is connected to the elastically deformable compensation ring 27; together they belong to a centring member *28* connected to the video disc *2*, which member forms part of an integral unit made of an elastic plastics, which unit also comprises the central portion 17. This unit constitutes a centring disc, which disc has substantially the form of a diaphragm with an outer ring 29, an inner portion comprising the central portion 17 and the portion 18, and a corrugation 34 which connects the outer ring 29 to the inner portion. The outer ring 29 is situated on the upper side of the video disc 2 and the corrugation 34 extends through the central opening 9 in the disc and projects beyond the outer side of the disc. Its outer circumference corrugation fits tightly in the central opening 9 and the portion of the corrugation which projects from the video disc functions as the previously mentioned elastically deformable compensation ring 27 of the centring disc.

The centring disc *28* is manufactured from a suitable elastic plastics, for example a polyamide. The centring disc is not only suitable for use in conjunction with video discs but may for example also be employed in conjunction with, for example, magnetic information discs for use in peripheral equipment for computers and other data processing systems. In the case of a magnetic information disc of approximately 20-cm diameter an eccentricity of a track in the information layer of more than 20 microns is considered unacceptable for specific applications. When a drive spindle 130 is used which is journalled in the housing of an electric motor 131 by means of a ball-bearing 132 at one end and a suitable bearing at the other end, an eccentricity of the spindle of less than 10 mircons cannot readily be achieved even if precision bearings are employed. This means that a tolerance range of only 10 microns is available for taking up the eccentricity errors in respect of the location of the wall 15 of the recess 14 in the turntable 12 and of the centring of the information disc on the turntable. However, it has been shown that rather surprisingly these requirements can be met with a comparatively simple plastics component such as the centring disc *28* because the elastic deformation of the compensation ring 27 provides a compensation for any local irregularities around the circumference of the centring disc. These irregularities may be for example, surface unevenesses of the wall 15 and of the outer wall of the corrugations 34 and irregularities caused by the presence of dust and other extraneous particles.

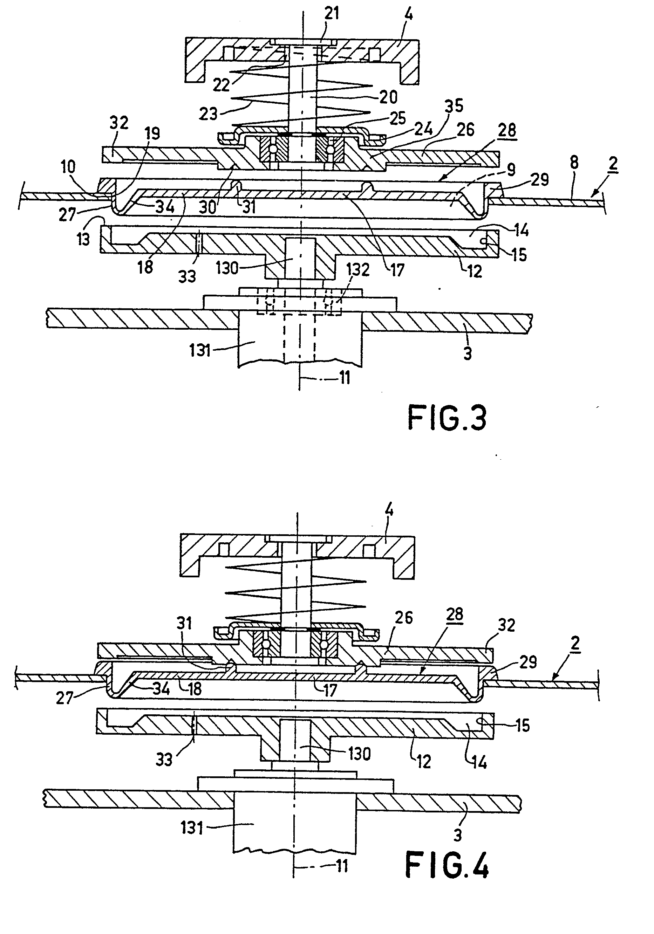

How the video disc *2* is inserted, centred and retained will be described in particular with reference to Figs. 3 to 6. In the position shown in Fig. 3 of the turntable 12 relative to the member 26, the space between these two parts is such that the video disc together with the centring disc *28* can be inserted between them. The member 26 has a central portion 35 with a circular groove 30 of V-shaped cross-section. On its side facing the member 26 the central portion 17 of the centring disc *28* is formed with an upwardly projecting ring 31 of corresponding diameter to the groove 30. Thus, the member 26 and the centring disc *28* can cooperate with each other, and the displacement means in the drive unit for axially moving the central portion 17 are centred thereon. On its circumference the member 26 has an annular portion 32 which is coaxial with the said central portion 35. This annular portion 32 serves as a video disc loader. As will be explained hereinafter, the video disc *2* is pressed against the supporting surface 13 of the turntable 12.

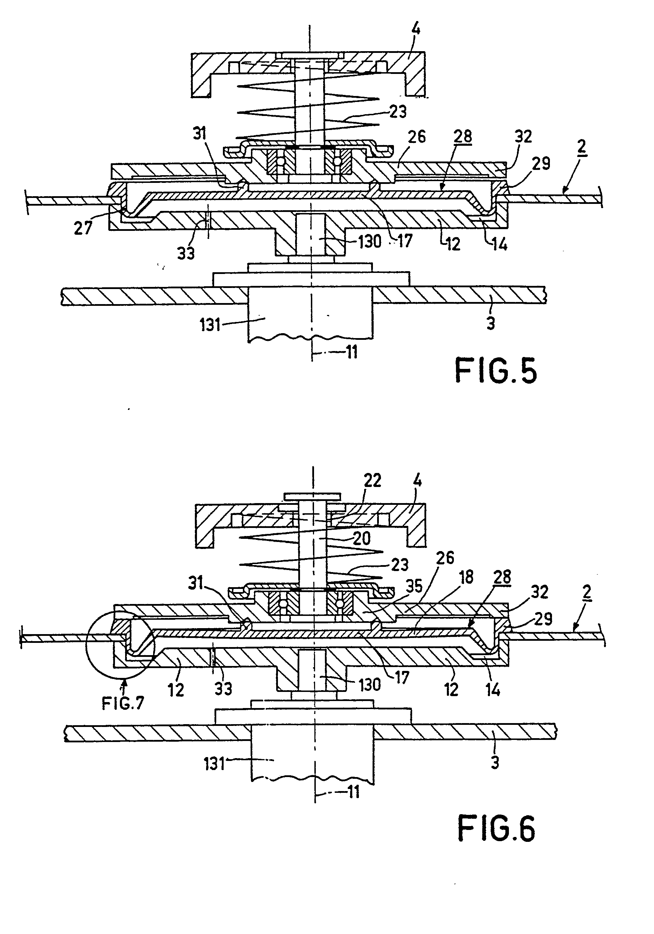

In Fig. 4 the member 26 has been lowered by the movement of the cover 4 and now makes contact with the upwardly projecting ring 31 of the centring disc *28*. When the video disc *2*, as is illustrated in Fig. 1, is manually placed on the turntable 12, the situation of Fig. 4 will normally not occur, but the centring disc *28* will already make contact with the turntable 12 before the cover is closed. In Fig. 5 the cover has further been closed, so that the elastic compensation ring 27 engages with the recess 14 in the turntable and the compression spring 23 is just not compressed. It is possible, and even likely after frequent use, that insertion of the centring disc into the turntable cannot be effected without exerting a certain effort. As the elastic compensation ring 27 will then engage with the wall of the recess 14 in the turntable over the entire circumference in a comparatively accurate manner, a vent opening 33 is formed in the turntable in order to avoid air being trapped between the centring disc and the turntable. The central portion 35 of the member 26 is so situated relative to the circumferential portion 32 which serves as an information-disc loader, that upon an axial displacement of the displacement means, first contact is made with the central portion 17 of the centring disc, as is shown in Fig. 5, and subsequently this central portion is moved axially, see Fig. 6. Thus, the video disc is first of all centred. It is not until after this that the information-disc loader 32 bears on the outer ring 29 of the centring disc *28* and the video disc is urged against the supporting disc 13 of the turntable 12 by the disc loader.

The turntable 12 makes direct contact with the underside of the video disc, so that said disc is directly supported thereby. In Fig. 6 the compression spring 23 is compressed, so that the pin 20 can rotate freely in the opening 22 in the cover 4 of the video disc player. The portion 18 of the centring disc *28* is now slightly elastically deflected. This results in an elastic radial deformation of the corrugation 34 of the centring disc, a portion of which corrugation junctions as the elastic compensation ring 27.

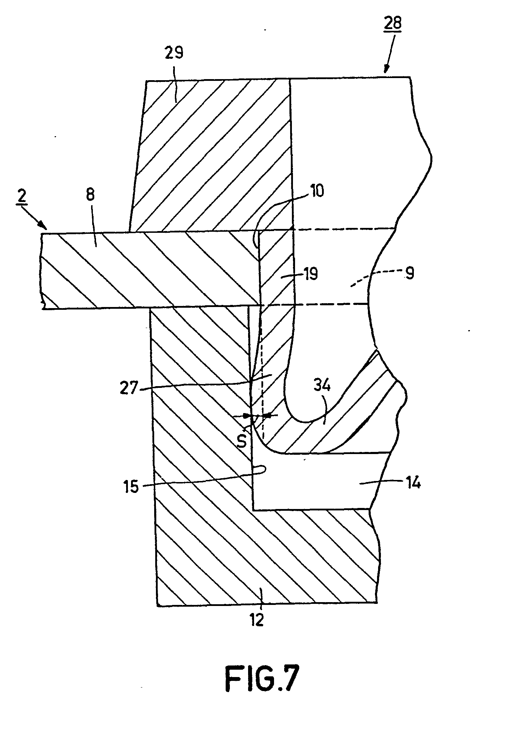

Fig. 7 relates in particular to this situation. Fig. 7 shows that the wall 10 of the central opening 9 of the video disc has a slightly smaller diameter than the wall 15 of the recess 14 in the turntable. This leaves a certain radial distance between the two walls, which distance is exaggerated in Fig. 7 for the sake of clarity and is designated by the letter S. In practice it can readily be ensured that the difference in diameter does not exceed some tens of microns when the central opening 9 in the video disc has a nominal diameter of 35 mm. This difference in diameter can readily be compensated for by the elastically deformable ring 27. In this respect it is of importance that by centrally loading the central portion 17 in the axial direction a uniform pressure is exerted in all directions, so that the dimension S will be substantially the same at all points around the circumference and the difference in diameter between the wall 10 of the central opening 9 of the video disc and the wall 15 of the recess 14 in the turntable is uniform over the entire circumference. This uniformity may be disturbed by unevenesses on the surfaces of the walls but not to such an extent that this results in a contribution to the eccentricity equal to the height of the uneveness.

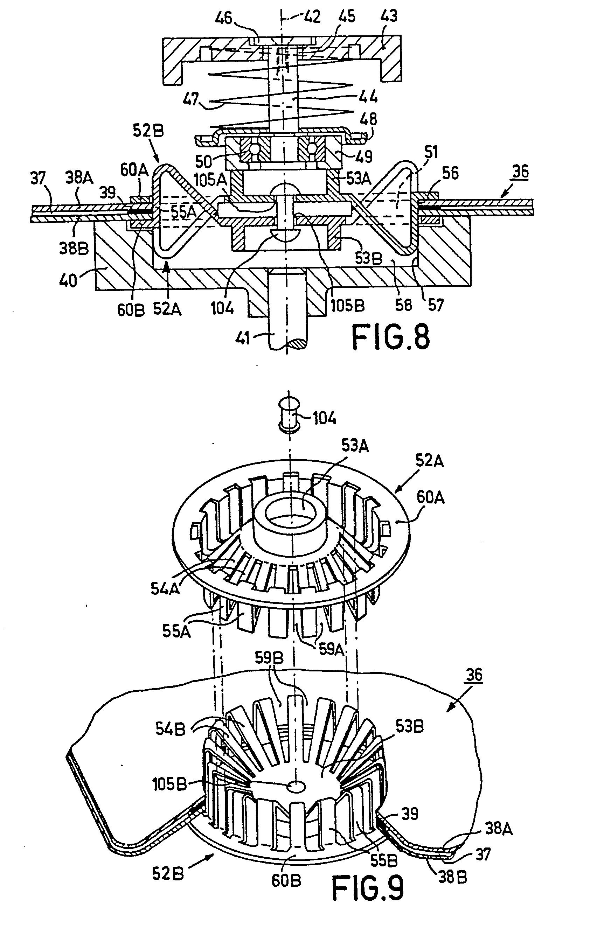

In the embodiments of the system which are shown in Figs. 1 to 7 the information disc cannot be placed on the drive unit in an inverted position. Fig. 8 relates to an embodiment of the invention in which this is possible. The information disc 36 comprises a carrier consisting of two glass plates 38A and 38B which are spaced from each other by a gas-filled space 37. Between the plates a spacer 39 is interposed, another spacer (not shown) being located nearer the circumference, not shown of the information discs. The information layers of the information disc are not shown and are located on the inner sides of the glass plates 38A and 38B, i.e. the sides facing the gas-filled space 37. Such a disc has already been proposed by the Applicants as an optical storage disc for use in conjunction with data-processing equipment (see United States Patent Specification 4,074,282, which is incorporated herein by reference). The information disc can be used in the position shown in Fig. 8, but can also be used with the glass plate 38A facing the turntable 40. The turntable is mounted on a drive spindle 41 which, in a manner not shown, can be rotated about an axis of rotation 42 by a motor. The drive unit comprises a bracket 43, which is movable in the direction of the axis of rotation 42 and in which a pin 44 is loosely journalled, which pin projects through an opening 45 with clearance and is provided with a flange 46 at its upper end. These parts are similar to the corresponding parts in Figs. 3 to 6. A compression spring 47 exerts pressure on a disc 48 which bears on a rotating memeber 49 through a ball-bearing 50 of which the inner race is mounted on the pin 44.

In the central opening 51 of the information disc 36 two centring elements 52A and 52B are disposed. Also see Fig. 9, which shows the two centring elements in an exploded view. The centring elements each have a central portion 53A and 53B respectively, which is adapted to cooperate with the pressure member 49, and peripheral portions 55A and 55B respectively, which cooperate both with the wall 56 of the central opening 51 of the information disc 36 and with the wall 57 of a recess 58 in the turntable 40, the peripheral portions of each centring element being connected to the central portion of the element by elastic intermediate portions 54A and 54B respectively which radiate from the central portion. The bracket 43, together with the pin 44, the compression spring 47, the disc 48, the pressure member 49 and the ball-bearing 50, constitute the displacement means of the drive unit for axially moving one of the central portion 53A or 53B of one of the centring members. Between the intermediate portions 54A of the centring element 52A slots 59A are formed. The centring element 52B is identical to the centring element 52A and thus has similar slots 59B. The slots 59A, B are slightly broader than the portions 54A, B, enabling the two centring elements 52A and 52B to be mounted opposite each other in the central opening 51 of the information disc 36 in the manner illustrated in Figs. 8 and 9. The intermediate portions of each centring element then pass through the slots of the other centring element to interdigitate with the intermediate portions of that element. The peripheral portions 55A are interconnected by a flange 60A, the portions 55B by a flange 60B. Each of the centring elements 52A and 52B thus constitutes an integral unit. This unit, like the centring disc in the previously described embodiment, is manufactured from a suitable elastic plastics.

The central portions 53A and B are coupled to each other by means of a coupling member 104, this member takes the form of a plastics rivet which extends with clearance through openings 105A and 105B in the central portions 53A and B of the two centring elements. In the situation shown in Fig. 8 the central portion 53A is slightly offset in an axial direction, without thereby affecting the position of the central portion 53B of the other centring element.

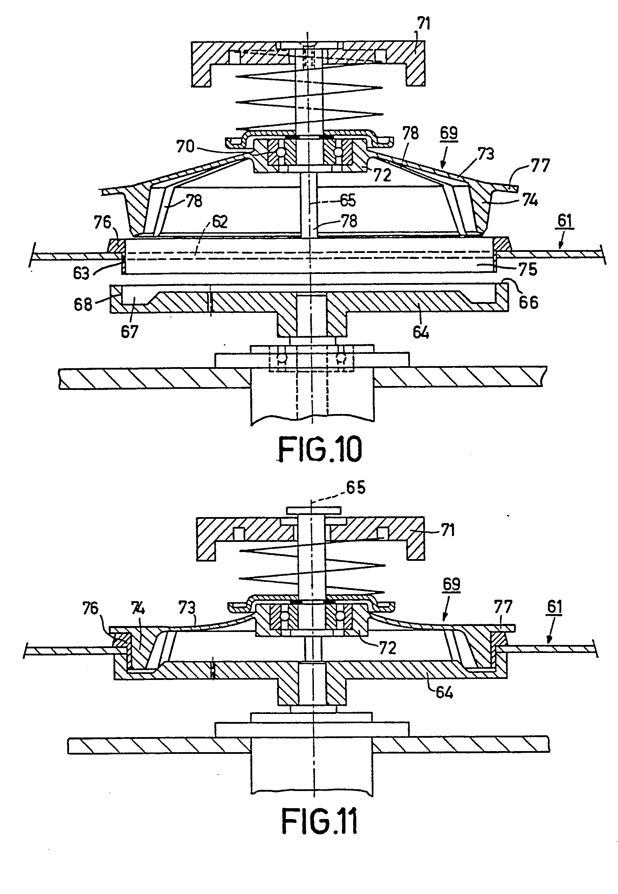

Fig. 10 relates to an embodiment of the invention which illustrates that it is not necessary for the centring element to be bodily connected to the information disc. An information disc 61 is shown having a central opening 62 which is bounded by a circular wall 63, a turntable 64 which rotates about an axis of rotation 65 and has a supporting surface 66 in which a recess 67 is formed, which recess is bounded by a circular wall 68 which is concentric with the axis of rotation 65. On the drive unit there is disposed a centring element 69 which rotates along with the information disc 61 and which is connected to an axially movable bracket 71 of the drive unit through a ball-bearing 70. The centring element 69 has a central portion 72 and a plurality of peripheral portions 74, in this case six, for cooperation both with the wall 63 of the central opening 62 of the information disc 61 and with the wall 68 of the recess 67 in the turntable 64, the peripheral portions being connected to the central portion by elastic intermediate portions 73. The elastic intermediate portions 73 are spaced from each other by slots 78. The six portions 73 are elastically deformable independently of each other upon an axial movement of the central portion 72. As the displacement means for axially moving said central portion in the embodiment of Fig. 10 fully correspond to those shown in the previous Figures 1—6 and 8, the individual parts are not numbered and are not discussed. The centring element *69* cooperates with the wall 63 of the central opening 62 of the information disc *61* and also with the wall 68 of the recess 67 in the turntable 64 *via* elastically deformable compensation means, which are formed by an elastically deformable compensation ring 75. Said ring is provided on one side with a flange 76 and extends through the central opening 62 and beyond the other side of the information disc *61*.

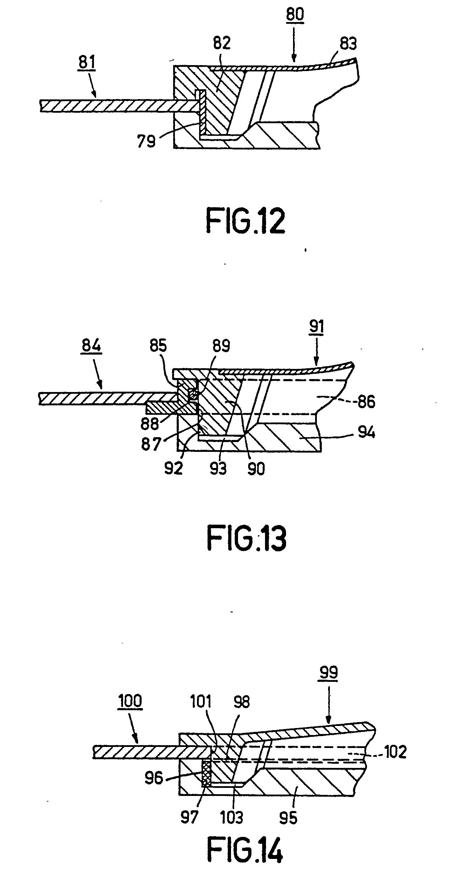

Fig. 11 shows the situation in which the information disc is centred on the turntable 64 and is urged axially against the supporting surface 66 of the turntable 64 *via* flanges 77 on the peripheral portions 74.

Fig. 12 shows a detail of a system similar to that of Figs. 10 and 11, in which an elastically deformable compensation ring 79 is mounted on the peripheral portions 82 of a centring element *80*. In this embodiment neither the elastically deformable compensation means for elastically compensating for differences in diameter through elastic radial deformation, nor any portions of the centring element are connected to the information disc 81. All these parts are connected to the drive unit. The peripheral portions 82 of the centring element *80* are connected to the central portions, not shown, by elastic intermediate portions 83 made of a metal leaf-spring material. The peripheral portions 82 can be manufactured from, for example aluminium or a plastics and be connected to the leaf springs 83 by an adhesive. The elastic compensation ring 79 may be manufactured from, for example, rubber or a plastics with elastomeric properties.

In the embodiment of Fig. 13 the information disc *84* is provided with a hub 85, in which the central opening 86 is formed. The wall 87 of the central opening comprises portions which define an annular space 88, the elastically deformable compensation ring 89, which in the embodiment shown is constituted by an O-ring, being accommodated in the annular space. The O-ring, at least when the information disc is not mounted on the drive unit, projects radially inwards beyond the wall of the central opening. This is necessary because otherwise it cannot cooperate correctly with the peripheral portions 90 of the centring element 91. Furthermore, in the embodiment shown it is necessary that the wall 92 of the recess 93 in the turntable 94 has a slightly smaller diameter than the wall 87 of the central opening 86. The peripheral portions 90 of the centring element *91* will thus make contact with the wall 92 of the recess 93 in the turntable 94, whilst the difference in diameter between the wall 92 of the recess 93 and the wall 87 of the central opening 56 is compensated for by the elastically deformable O-ring 89.

The embodiment of Fig. 14 relates to a case in which the elastic compensation means are arranged on the turntable. The turntable 95 comprises an elastic ring 97, which is arranged against the wall 96 of the recess 103 in the turntable and against which the peripheral portions 98 of the centring element *99* press. Thus, the information disc 100 is in direct contact with the peripheral portions 98 at the wall 101 of its central opening 102. It will be evident that in the embodiment shown the inner diameter of the elastically deformable compensation ring 97 must be smaller than the diameter of the wall 101 of the central opening of the information disc *100*.

## Claims

1. System for writing and/or reading information, which system comprises a drive unit (*1*) and interchangeable information discs (*2*) which are each adapted to be placed on and subsequently removed from the drive unit and which each comprise a carrier (8) and an information layer supported thereby and are each provided with a central opening (9) which is bounded by circular wall (10), a centring device being provided for centring an information disc (*2*) on the drive unit (*1*), the system comprising:
—a turntable (12), which is rotatable about an axis of rotation (11) and which has a supporting surface (13) for an information disc (*2*) on one side, in which side is formed a recess (14) bounded by a circular wall (15) which is concentric with the axis of rotation (11);
—a centring element (16) which rotates with an information disc (*2*) on the turntable and which has a central portion (17) and a peripheral portion (19) or portions adapted to cooperate both with the wall (10) of the central opening (9) of the information disc (*2*) and with the wall (15) of the recess (14) in the turntable (12), for centring the information disc (*2*) on the turntable (12) upon an elastic axial displacement of the central portion (17), the peripheral portion or portions being connected to the central portion by an elastic intermediate portion (18) or portions; and
—displacement means (4, 20—24) in the drive unit (*1*) for axially displacing the central portion (17) of the centring element (*16*), characterized in that
—each information disc (*2*) has a substantially rigid carrier (8),
—the wall (10) of the central opening (9) in each information disc (*2*) has an accurately finished surface, and
—the centring element (16) is arranged to cooperate with at least one of said walls of the central opening of the relevant information disc and the recess (14) in the turntable (12) *via* elastically deformable compensation means (27) for elastically compensating for differences in the diameters of said walls through elastic radial deformation (Fig. 1—7).

2. A system as claimed in Claim 1, characterized in that the elastically deformable compensation means comprise an elastically deformable compensation ring (27) (Figs. 1—7).

3. A system as claimed in Claim 2, characterized in that the elastically deformable compensation ring (27) is connected to the information disc (2) so that it can be placed on and removed from the drive unit (1) together with said disc.

4. A system as claimed in Claim 3, characterized in that the centring element (16) is connected to the elastically deformable compensation ring (17) (Fig. 1—7).

5. A system as claimed in Claim 4, characterized in that the elastically deformable compensation ring (27) and the centring element (16) together belong to a centring member (28) which is connected to the information disc (2) and which constitutes an integral unit made of an elastic plastics (Figs. 1—7).

6. A system as claimed in Claim 5, characterized in that the central and intermediate portions (17, 18) of the centring element together with the elastic compensation ring (27) constitute a centring disc (28) which is integrally made of an elastic plastics (Figs. 1—7).

7. A system as claimed in Claim 6, characterized in that the centring disc (28) has substantially the form of a diaphragm, comprising an outer ring (29), an inner portion (17—18) and a corrugation (34) which connects the outer ring (29) to the inner portion, the outer ring (29) bearing on one side of the information disc (2) and the corrugation extending through the central opening (9) of said disc and projecting the other side of the information disc, and the corrugation engaging at its outer circumference with the wall of the central opening (9) of the information disc (2), the portion of the corrugation which projects beyond the information disc functioning as the elastically deformable compensation ring (27) of the centring disc (28) (Figs. 1—7).

8. A system as claimed in Claim 6, charcterized in that the centring disc and/or the turntable (12) is (are) formed with at least one vent hole (33) for venting the space inside the recess (14) in the turntable when the information disc (2) is in place (Figs. 1—7).

9. A system as claimed in Claim 5, characterized in that the information disc (36) is provided with two centring elements (52A, 52B), one on each side of the information disc, each of the centring elements having elastic intermediate portions (54A, 54B) which radiate from the central portion of the element and which are spaced from one another by slots (59A, 59B), through which slots the intermediate portions of the other centring element project (Figs. 8—9).

10. A system as claimed in Claim 9, characterized in that the central portions (54A, B) of the two centring elements (52A, B) are coupled to each other by a coupling element (104) (Fig. 8—9).

11. A system as claimed in Claim 2, characterized in that the centring element (80) which rotates along with an information disc (81), in known manner, forms part of and is connected to the drive unit and that the elastically deformable compensation ring (79) is arranged on the peripheral portion or portions of the centring element (Fig. 12).

12. A system as claimed in Claim 2, characterized in that the elastically deformable compensation ring (97) is connected to the turntable (95) and is arranged against the wall (96) of the recess (103) in the turntable (Fig. 14).

13. A system as claimed in Claim 3, characterized in that the information disc (84) is provided with a hub (85) in which the central opening (86) is formed, and that the inner wall (87) of the central opening is provided with portions which define an annular space (88), the elastically deformable compensation ring (89) being arranged in the annular space and projecting radially inwards beyond the wall of the central opening, at least when the information disc (84) is not mounted on the drive unit (Fig. 13).

14. A system as claimed in Claim 1, characterized in that, for supporting the information disc (61) in the drive unit, the turntable (64) makes direct contact with the information disc (61) and thus directly supports said disc (Figs. 10—11).

15. A system as claimed in Claim 4, characterized in that the displacement means (4, 20—24) in the drive unit (1) and the said central portion (17) of the centring element are provided with mutually cooperating portions (30, 31) for centring the displacement means relative to the said central portion and thus relative to the axis of rotation (11) on the turntable (12) (Figs. 1—7).

16. A system as claimed in Claim 1, characterized in that the displacement means (4, 20—24) in the drive unit (1) are coaxially connected to an information disc loader (32) for urging the information disc (2) against the turntable (12), said displacement means and the information disc loader being arranged relative to each other in such a way that upon an axial displacement the displacement means when the information disc is in place on the turntable, first make contact with the central portion (17) of the centring element and then move this portion axially in such a way that the information disc is centred, and finally the information disc loader (32) bears on the information disc so as to urge said disc against the turntable (12) (Figs. 1—7).

17. A drive unit belonging to a system as claimed in any of the Claims 1—16.

18. An information disc belonging to a system as claimed in any of the Claims 1—16.

**Patentansprüche**

1. System zum Einschreiben und/oder Auslesen von Information, das eine Antriebseinheit (1) aufweist, sowie auswechselbare, in die Antriebseinheit schiebbare und aus derselben entfernbare Informationsscheiben (2), die mit je einem Träger (8) sowie einer von diesem getragenen Informationsschicht und mit einer zentralen Öffnung (9) versehen sind, die durch eine kreisförmige Innenwand (10) begrenzt wird, wobei weiterhin eine Zentriervorrichtung zum Zentrieren einer Informationsscheibe (2) auf der Antriebseinheit (1) vorhanden ist, wobei das System

—einen um eine Drehungsachse (11) drehbaren Plattenteller (12) mit einer Tragfläche (11) für eine Informationsscheibe (2) auf der einen Seite aufweist, wobei in dieser Seite eine durch eine kreisförmige Wand (15) konzentrisch zu der Drehungsachse (11) begrenzte Ausnehmung (14) gebildet ist;

—weiterhin ein mit einer Informationsscheibe (2) auf dem Plattenteller liegend mitdrehendes Zentrierelement (16) mit einem Mittenteil (17) und einem Randteil (19) oder mit Randteilen, der bzw. die mit der Wand (10) der Zentralöffnung (9) der Informationsscheibe (2) sowie mit der Wand (15) der Ausnehmung (14) in dem Plattenteller (12) zusammenarbeitet bzw. zusammenarbeiten, zum bei einer elastischen axialen Verschiebung des Zentralteils (17) Zentrieren der Informationsscheibe (2) auf dem Plattenteller (12), wobei der Randteil oder die Randteile durch einen elastischen Zwischenteil (18) oder elastische Zwischenteile mit dem Zentralteil verbunden ist bzw. sind; sowie

—Verschiebungsmittel (4, 20—24) in der Antriebseinheit (1) zur axialen Verschiebung des Zentralteils (17) des Zentrierelementes (16), dadurch gekennzeichnet, dass

—jede Informationsscheibe (2) einen im wesentlichen starren Träger (8) aufweist,

—die Wand (10) der Zentralöffnung (9) in jeder Informationsscheibe (2) eine genaue Bearbeitung erfahren hat und

—das Zentrierelement (16) mit mindestens einer der Wände der Zentralöffnung der betreffenden Informationsscheibe und der Ausnehmung (14) in dem Plattenteller (12) über elastisch verformbare Ausgleichsteile (27) zum elastischen Ausgleichen von Durchmesserunterschieden durch elastische radiale Verformung zusammenarbeitet.

2. System nach Anspruch 1, dadurch gekennzeichnet, das die elastisch verfombaren Ausgleichsteile einen elastisch verformbaren Ausgleichsring (27) aufweist.

3. System nach Anspruch 2, dadurch gekennzeichnet, dass der elastisch verformbare Ausgleichsring (27), mit der Informationsscheibe (2) derart verbunden ist, dass dieser zusammen mit der genannten Scheibe auf die Antriebseinheit (1) gelegt bzw. von derselben entfernt werden kann.

4. System nach Anspruch 3, dadurch gekennzeichnet, das das Zentrierelement (16) mit dem elastisch verformbaren Ausgleichsring (27) verbunden ist.

5. System nach Anspruch 4, dadurch genennzeichnet, dass der elastisch verformbare Ausgleichsring (27) und das Zentrierelement (16) zusammen zu einem Zentrierelement (28) gehören, das mit der Informationsscheibe (2) verbunden ist und einen aus einem elastischen Kunststoff hergestellten Teil bilden.

6. System nach Anspruch 5, dadurch gekennzeichnet, dass der Zentralteil und der Zwischenteil (17, 18) des Zentrierelementes zusammen mit dem elastischen Ausgleichsring (27) eine Zentrierscheibe (28) bilden, die als einen einzigen Teil aus einam elastischen Kunststoff hergestellt ist.

7. System nach Anspruch 6, dadurch gekennzeichnet, dass die Zentrierscheibe (28) im wesentlichen die Form einer Blende aufweist, und zwar mit einem Aussenring (29), einem inneren Teil (17—18) und einem gewellten Teil (34), der den Aussenring (29) mit dem inneren Teil verbindet, wobei der Aussenring (29) auf nur einer Seite der Informationsscheibe (2) ruht und der Wellteil sich durch die Zentralöffnung (9) der genannten Scheibe erstreckt und sich bis über die andere Seite der Informationsscheibe hinweg erstreckt und wobei die Wellung am Umfang mit der Wand der Zentralöffnung (9) der informationsscheibe (2) zusammenarbeitet, während derjenige Teil der Wellung, der sich bis jenseits der Informationsscheibe erstreckt, als der elastisch verformbare Ausgleichsring (27) der Zentrierscheibe (28) wirksam ist.

8. System nach Anspruch 6, dadurch gekennzeichnet, dass die Zentrierscheibe und/oder der Plattenteller (12) mit wenigstens einer Entlüftungsöffnung zum Entlüften des Raumes innerhalb der Ausnehmung (14) des Plattentellers wenn die Informationsscheibe (2) an ihrem Platz liegt, versehen ist bzw. sind.

9. System nach Anspruch 5, dadurch gekennzeichnet, dass die Informationsscheibe (36) mit zwei Zentrierelementen (52A, 52B) versehen ist, und zwar je auf einer Seite der Informationsscheibe, wobei jedes der Zentrierelemente einen elastisch verformbaren Teil (54A, 54B) aufweist, der von dem Zentralteil des Elementes ausstrahlt und wobei diese Teile durch Schlitze (59A, 59B) beabstandet sind, wobei durch diese Schlitze die Zwischenteil des anderrn Zentrierelementes hervorragen.

10. System nach Anspruch 9, dadurch gekennzeichnet, dass die Zentralteile (54A, B) der beiden Zentrierelemente (52A, B) durch ein Kupplungselement (104) miteinander gekuppelt sind.

11. System nach Anspruch 2, dadurch gekennzeichnet, dass das Zentrierelement (80), das auf bekannte Weise mit der Informationsscheibe (81) dreht, einen Teil der Antriebseinheit bildet und damit verbunden ist und dass der elastisch verformbare Ausgleichsring (79) an dem Umfangsteil bzw. an den Umfangsteilen des Zentrierelementes angeordnet ist.

12. System nach Anspruch 2, dadurch gekennzeichnet, dass der elastisch verformbare Ausgleichsring (97) mit dem Plattenteller (95) verbunden und an der Wand (96) der Ausnehmung (103) in dem Plattenteller angeordnet ist.

13. System nach Anspruch 3, dadurch gekennzeichnet, dass die Informationsscheibe (84) mit einer mit dem Informationsschichtträger verbundenen Nabe (85) versehen ist, in der sich die Zentralöffnung (86) defindet und das die Innenwand (87) Zentralöffnung mit einen ringförmigen Raum (88) definierenden Teilen versehen ist, wobei der elastisch verformbare Ausgleichsring (89) in dem ringförmigen Raum vorgesehen ist und in radialer Richtung einwärts bis jenseits der Wand der Zentralöffnung vorspringt, wenigstens wenn die Informationsscheibe (84) nicht auf der Antriebseinheit angeordnet ist.

14. System nach Anspruch 1, dadurch gekennzeichnet, dass zum Unterstützen der Informationsscheibe (61) in der Antriebseinheit der Plattenteller (64) direkten Kontakt hat mit der Informationsscheibe (61) und folglich diese Scheibe unmittelbar unterstützt.

15. System nach Anspruch 4, dadurch gekennzeichnet, dass die Verschiebungsmittel (4, 20—24) in der Antriebseinheit (1) und der genannte Mittenteil (17) des Zentrierelementes mit Teilen (30, 31) versehen sind, die zum Zentrieren der Verschiebungsmittel gegenüber dem genannten Mittenteil und folglich gegenüber der Drehungsachse (11) des Plattentellers (12) miteinander zusammenarbeiten.

16. System nach Anspruch 1, dadurch gekennzeichnet, dass die Verschiebungsmittel (4, 20—24) in der Antriebseinheit (1) mit einem Informationsscheibendrücker (32) koaxial verbunden sind und zwar zum Anpressen der Informationsscheibe (2) gegen den Plattenteller (12) wobei diese Verschiebungsmittel und der Informationsscheibendrücker derart gegenüber einander angeordnet sind, dass die Verschiebungsmittel bei einer axialen Verschiebung, wenn die Informationsscheibe sich an ihrem Platz auf dem Plattenteller befindet, zunächst den Mittenteil (17) des Zentrierelementes berühren und danach diesen Teil axial derart verschieben, dass die Informationsscheibe zentriert wird und dass zum Schluss der Informationsscheibendrücker (32) auf der Informationsscheibe ruht, und zwar um sie gegen den Plattenteller (12) zu drücken.

17. Antriebseinheit, die zu einem System nach einem der Ansprüche 1—16 gehört.

18. Informationsscheibe, die zu einem System nach einem der Ansprüche 1—16 gehört.

## Revendications

1. Système pour écrire et/ou lire de l'information, comprenant une unité d'entraînement (1) et des disques d'information interchangeables (2) qui peuvent chacun être placés sur l'unité d'entraînement et être ultérieurement enlevés de celle-ci, qui comprennent chacun un support (8) et une couche d'information supportée par le support et qui sont chacun pourvus d'une ouverture centrale (9) bornée par une paroi circulaire (10), un dispositif de centrage étant prévu pour centrer un disque d'information (2) sur l'unité d'entraînement (1), le système comprenant:
— un plateau tourne-disque (12), qui peut tourner autour d'un axe de rotation (11) et qui, d'un côté, comporte une surface de support (13) pour un disque d'information (2) dans laquelle est ménagé un évidement (14) borné par une paroi circulaire (15) qui est concentrique à l'axe de rotation (11);
— un élément de centrage (16) qui tourne avec un disque d'information (2) sur le plateau tourne-disque et qui comporte une partie centrale (17) et une ou plusieurs parties périphériques (19) propres à coopérer à la fois avec la paroi (10) de l'ouverture centrale (9) du disque d'information (2) et avec la paroi (15) de l'évidement (14) du plateau tourne-disque (12), pour centrer le disque d'information (2) sur le plateau (12) lors d'un déplacement axial élastique de la partie centrale (17), la ou les parties périphériques étant reliées à la partie centrale par une ou plusieurs parties intermédiaires élastiques (18), et
— des moyens de déplacement (4, 20—24) dans l'unité d'entraînement (1) pour déplacer axialement la partie centrale (17) de l'élément de centrage (16), caractérisé en ce que:
— chaque disque d'information (2) comporte un support en substance rigide (8);
— la paroi (10) de l'ouverture centrale (9) de chaque disque d'information (2) présente une surface finie avec précision, et
— l'élément de centrage (16) est prévu pour coopérer avec au moins une des parois de l'ouverture centrale de disque d'information en question et avec l'évidement (14) du plateau tourne-disque (12) par l'intermédiaire de moyens de compensation élastiquement déformables (27) destinés à compenser élastiquement des différences de diamètres des parois par une déformation radiale élastique.

2. Système suivant la revendication 1, caractérisé en ce que les moyens de compensation élastiquement déformables comprennent un anneau de compensation élastiquement déformable (27).

3. Système suivant la revendication 2, caractérisé en ce que l'anneau de compensation élastiquement déformable (27) est relié au disque d'information (2), de sorte qu'il peut être mis en place sur l'unité d'entraînement (1) et être retiré de celle-ci conjointement avec le disque.

4. Système suivant la revendication 3, caractérisé en ce que l'élément de centrage (16) est relié à l'anneau de compensation élastiquement déformable (27).

5. Système suivant la revendication 4, caractérisé en ce que l'anneau de compensation élastiquement déformable (27) et l'élément de centrage (16) appartiennent ensemble à un élément de centrage (28) qui est relié au disque d'information (2) et qui constitue un élément d'une seule pièce en matière plastique élastique.

6. Système suivant la revendication 5, caractérisé en ce que les parties centrale et intermédiaire (17, 18) de l'élément de centrage constituent, avec l'anneau de compensation élastique (27), un disque de centrage (28) qui est fabriqué d'une seule pièce en une matière plastique élastique.

7. Système suivant la revendication 6, caractérisé en ce que le disque de centrage (28) a, en substance, la forme d'un diaphragme comprenant un anneau extérieur (29), une partie intérieure (17, 18) et une ondulation (34) qui relie l'anneau extérieur (29) à la partie intérieure, l'anneau extérieur (29) portant sur une face du disque d'information (2) et l'ondulation traversant l'ouverture centrale (9) du disque et s'étendant de l'autre côté du disque d'information, cette ondulation étant en contact, par sa circonférence extérieure, avec la paroi de l'ouverture centrale (9) du disque d'information (2), la partie de l'ondulation qui s'étend au-delà du disque d'information agissant comme anneau de compensation élastiquement déformable (27) du disque de centrage (28).

8. Système suivant la revendication 6, caractérisé en ce que le disque de centrage et/ou le plateau tourne-disque (12) est ou sont percés d'au moins un évent destiné à ventiler l'espace à l'intérieur de l'évidement (14) du plateau tourne-disque lorsque le disque d'information (2) est en place.

9. Système suivant la revendication 5, caractérisé en ce que le disque d'information (36) est pourvu de deux éléments de centrage (52A, 52B), un de chaque côté du disque d'information, chaque élément de centrage comportant des parties intermédiaires élastiques (54A, 54B) qui s'étendent radialement depuis la partie centrale de l'élément et qui sont espacées les unes des autres par des fentes (59A, 59B) traversées par les parties intermédiaires de l'autre élément de centrage.

10. Système suivant la revendication 9, caractérisé en ce que les parties centrales (54A, 54B) des deux éléments de centrage (52A, 52B) sont couplées l'une à l'autre par un élément de couplage (104).

11. Système suivant la revendication 2, caractérisé en ce que l'élément de centrage (80) qui tourne avec un disque d'information (81), d'une manière connue, fait partie de l'unité d'entraînement et est relié à celle-ci et que l'anneau de compensation élastiquement déformable (79) est disposé sur la ou les parties périphériques de l'élément de centrage.

12. Système suivant la revendication 2, caractérisé en ce que l'anneau de compensation élastiquement déformable (97) est relié au plateau tourne-disque (95) et est disposé contre la paroi (96) de l'évidement (103) du plateau tourne-disque.

13. Système suivant la revendication 3, caractérisé en ce que le disque d'information (84) est pourvu d'un moyeu (85) dans lequel l'ouverture centrale (86) est formée, et que la paroi interne (87) de l'ouverture centrale est pourvue de parties qui définissent un espace annulaire (88), l'anneau de compensation élastiquement déformable (89) étant disposé dans l'espace annulaire et s'étendant radialement vers l'intérieur au-delà de la paroi de l'ouverture centrale, au moins lorsque le disque d'information (84) n'est pas monté sur l'unité d'entraînement.

14. Système suivant la revendication 1, caractérisé en ce que, pour supporter le disque d'information (61) dans l'unité d'entraînement, le plateau tourne-disque (64) est en contact direct avec le disque d'information (61) et supporte donc directment ce disque.

15. Système suivant la revendication 4, caractérisé en ce que les moyens de déplacement (4, 20—24) dans l'unité d'entraînement (1) et la partie centrale (17) de l'élément de centrage sont pourvus de parties mutuellement coopérantes (30, 31) pour centrer les moyens de déplacement par rapport à la partie centrale et ainsi par rapport à l'axe de rotation (11) du plateau tourne-disque (12).

16. Système suivant la revendication 1, caractérisé en ce que les moyens de déplacement (4, 20—24) dans l'unité d'entraînement (1) sont reliés coaxialement à un chargeur de disque d'information (32) pour solliciter le disque d'information (2) contre le plateau tourne-disque (12), les moyens de déplacement et le chargeur de disque d'information étant disposés l'un par rapport à l'autre d'une manière telle que, lors d'un déplacement axial, les moyens de déplacment, lorsque le disque d'information est en place sur le plateau tourne-disque, commencent par entrer en contact avec la partie centrale (17) de l'élément de centrage, puis déplacent cette partie centrale axialement de telle sorte que le disque d'information soit centré, et finalement le chargeur de disque d'information (32) appuie sur le disque d'information de manière à presser ce disque contre le plateau tourne-disque (12).

17. Unité d'entraînement appartenant à un système suivant l'une quelconque des revendications 1 à 16.

18. Disque d'information appartenant à un système suivant l'une quelconque des revendications 1 à 16.

# FIG.1

FIG. 2

FIG.3

FIG.4

FIG.5

FIG.6

4

29    28

2    8    10

19    9

27

S

15    34

12    14

**FIG.7**

FIG.8

FIG.9

FIG.10

FIG.11

FIG.12

FIG.13

FIG.14

8